**Europäisches Patentamt**

**European Patent Office**

**Office européen des brevets**

(19)

(11) Veröffentlichungsnummer: **0 239 903**
**B1**

(12)

# EUROPÄISCHE PATENTSCHRIFT

(45) Veröffentlichungstag der Patentschrift: **23.05.90**

(51) Int. Cl.⁵: **A 63 B 29/00**, A 44 B 13/00

(21) Anmeldenummer: **87104256.0**

(22) Anmeldetag: **23.03.87**

(60) **Verbunden mit 87902469.3/0261215 (europäische Anmeldenummer/Veröffentlichungsnummer) durch Entscheidung vom 26.04.89.**

(54) **Karabinerhaken, insbesondere für Bergsteiger.**

(30) Priorität: **29.03.86 DE 3610669**

(43) Veröffentlichungstag der Anmeldung:
**07.10.87 Patentblatt 87/41**

(45) Bekanntmachung des Hinweises auf die
Patenterteilung:
**23.05.90 Patentblatt 90/21**

(84) Benannte Vertragsstaaten:
**AT ES FR GB IT**

(56) Entgegenhaltungen:
**AT-B- 14 687**
**FR-A-1 029 557**
**FR-A-2 439 330**

(73) Patentinhaber: **Engers, Stefan**
**Kolberger Strasse 25**
**D-4370 Marl (DE)**

(72) Erfinder: **Engers, Stefan**
**Kolberger Strasse 25**
**D-4370 Marl (DE)**

(74) Vertreter: **Behrendt, Arne, Dipl.-Ing.**
**Yorckstrasse 62 Postfach 100 226**
**D-4630 Bochum 1 (DE)**

Courier Press, Leamington Spa, England.

# Beschreibung

Die Erfindung betrifft einen Karabinerhaken, insbesondere für Bergsteiger, mit einem C-förmigen Bügel, dessen Enden durch eine federnde Sperrklinke miteinander verbindbar sind, so daß sich ein geschlossener, länglicher Ring ergibt, an dessen einer Schmalseite ein Halteelement angreift und an dessen anderer Schmalsseite ein Führungsbereich für ein Sicherungsseil ausgebildet ist, wobei der längliche Ring mit Ausbiegungen oder Vorsprüngen ausgebildet ist, die den Führungsbereich bei Auflage des Ringes auf einer Ebene zwangsläufig in einen Abstand zu dieser Auflageebene verbringen.

Karabinerhaken der angegebenen Art werden von Bergsteigern verwendet, um das beim Klettern verwendete Sicherungsseil an einer mehr oder weniger geneigten Felswand zu sichern. Hierzu werden die Karabinerhaken mittels mehr oder weniger lang ausgebildeter Halteelemente, meistens in Form von vernähten Schlingen aus flachem Bandgewebe, an Sicherungspunkten im Fels wie Haken, Klemmkeilen oder dergl. festgelegt. Die unterschiedlich langen Halteelemente gleichen die Abweichungen der Sicherungspunkte vom geradlinigen Seilverlauf so weit wie möglich aus, damit das Seil möglichst wenig umgelenkt wird und von dem vorauskletternden Bergsteiger leichtgängig nachgezogen werden kann.

Die Halteelemente greifen jeweils an einer Schmalseite des Karabinerhakens an. An der gegenüberliegenden Schmalseite des Karabinerhakens befindet sich ein Führungsbereich für das Sicherungsseil, um welchem das Sicherungsseil im Sturzfalle mit großer Kraft herumgezogen wird. Aus diesem Grunde ist dieser Führungsbereich zumeiste im Querschnitt abgerundet ausgebildet, damit das Sicherungsseil im Sturzfalle mit möglichst wenig Reibungswiderstand von Verschleiß umgelenkt werden kann.

Nach der FR—A—1 029 557 ist ein Karabinerhaken bekannt, dessen länglich ausgebildeter Ring eine einseitige Ausbiegung bzw. einen Vorsprung aufweist, der dazu dient, die schwenkbare Sperrklinke am Mitteil des Ringes vorbei zu bewegen. Gemäß der FR—A—2 439 330 ist ein ringförmiges Halteteil bekannt, welches mittels einer Feder gegen den Hebel eines Sperrteiles gedrückt wird, um ein ungewolltes Öffnen der Sperrklinke zu verhindern. Das auf dem Steg verschiebbare ringförmige Halteteil, erstreckt sich dabei nach beiden Seiten senkrecht zur Haupterstreckungsebene des Stegs.

Ein Nachteil der nach dem Stande der Technik bekannten Karabinerhaken der eingangs genannten Art besteht darin, daß das Sicherungsseil im Sturzfalle mit verhältnismäßig großer Kraft zwischen dem Führungsbereich und der Felswand eingeklemmt wird. Das hat zur Folge, daß das Sicherungsseil an der rauhen Felsoberfläche verschlissen und beschädigt wird, so daß es zu Seilrissen kommen kann. Die dirch das Einklemmen des Sicherungsseiles erzeugten unkontrollierbaren Bremswirkungen verhindern darüberhinaus ein rechtzeitiges Ansprechen der neuerdings häufig verwendeten dynamischen Bremsvorrichtung am Anfang des Sicherungsseiles. Die Bremsvorrichtung kann deshalb oft die Sturzenergie nur unzureichend aufzehren, so daß sich das Verletzungsrisiko erheblich vergrößert.

Es ist Aufgabe der Erfindung, den Karabinerhaken der eingangs genannten Art dahingehend weiterzubilden, daß das Sicherungsseil im Sturzfalle nicht zwischen der Felswand und dem Führungsbereich des Karabinerhakens eingeklemmt wird.

Zur Lösung dieser Aufgabe schlägt die Erfindung ausgehend von einem Karabinerhaken der eingangs genannten Art vor, daß die Ausbiegungen oder Vorsprünge nach beiden Seiten senkrecht zur Haupterstreckungsebene des Ringes vorgesehen sind und ein freies Durchlaufen des Sicherungsseiles zwischen dem Führungsbereich und der Auflageebene ermöglichen.

Beim Karabinerhaken gemäß der Erfindung ist durch die erfindungsgemäß vorgeschlagenen Maßnahmen sichergestellt, daß der Führungsbereich zwangsläufig immer einen Abstand zur Auflageebene (Felsoberfläche) hat. Dieser Abstand ist natürlich so groß bemessen, daß das Sicherungsseil frei zwischen der Felsoberfläche und dem Führungsbereich durchlaufen kann. Das Sicherungsseil kann also nicht mehr zwischen der Felsoberfläche und dem Führungsteil eingeklemmt werden und dadurch beschädigt oder verschlissen werden. Auch die durch das Einklemmen verursachten unkontrollierbaren Bremswirkungen treten nicht mehr auf. Im Falle der Verwendung einer dynamischen Bremseinrichtung ist also sichergestellt, daß diese Bremseinrichtung vorschriftsmäßig zur Wirkung kommt.

Eine erste Ausführungsform der Erfindung sieht vor, daß der Steg des C-förmigen Bügels senkrecht zur Haupterstreckungsebene des Ringes nach oben und unten ausgebogen ist. Hierdurch wird sichergestellt, daß der Führungsbereich immer im Abstand von der Felswand gehalten wird, und zwar unabhängig davon, mit welcher Seite der Karabinerhaken sich an der Felswand abstützt.

Eine alternative Ausführungsform der Erfindung sieht vor, daß der Steg des C-förmigen Bügels und/oder die Sperrklinke senkrecht zur Haupterstreckungsebene des Ringes verdickt ausgebildet sind. Die Anbringung von solchen Verdickungen hat den Vorteil, daß diese gegebenenfalls auch nachträglich an bereits vorhandenen Karabinerhaken angebracht werden können, beispielsweise durch Anbringung entsprechend geformter Muffen oder dergleichen.

Eine dritte Ausführungsform der Erfindung sieht vor, daß der Steg des C-förmigen Bügels um seine Längsachse verwunden ausgebildet ist. Diese Ausführungsform des Karabinerhakens gemäß der Erfindung hat ebenso wie die beiden vorangehend geschilderten Ausführungsformen den Vorteil, daß der Führungsbereich bei jeder beliebigen Lage des Karabinerhakens von der Felsoberfläche abgehoben ist. Ein weiterer Vorteil ergibt sich daraus, daß die Sperrklinke am gegenüberliegenden Steg des C-förmigen Bügels vorbeigeschwenkt werden kann, so daß sich für die Sperrklinke ein größerer Öffnungswinkel ergibt und das Sicherungsseil leichter eingehakt werden kann.

Die drei oben erwähten Ausführungsbeispiele der Erfindung werden im folgenden anhand der Zeichnung näher erläutert. Es zeigen:

Fig. 1 Einen Karabinerhaken gemäß der Erfindung in Seitenansicht;

Fig. 2 eine Draufsicht zu Fig. 1;

Fig. 3 einen praktischen Einsatzfall des Karabinerhakens gemäß den Fig. 1 und 2;

Fig. 4 eine Seitenansicht eines Karabinerhakens gemäß der Erfindung in einer zweiten Ausführungsform;

Fig. 5 eine Draufsicht zu Fig. 4;

Fig. 6 eine Seitenansicht eines Karabinerhakens gemäß der Erfindung in einer dritten Ausführungsform;

Fig. 7 eine Seitenansicht zu Fig. 6;

Fig. 8 eine Stirnansicht zu Fig. 6.

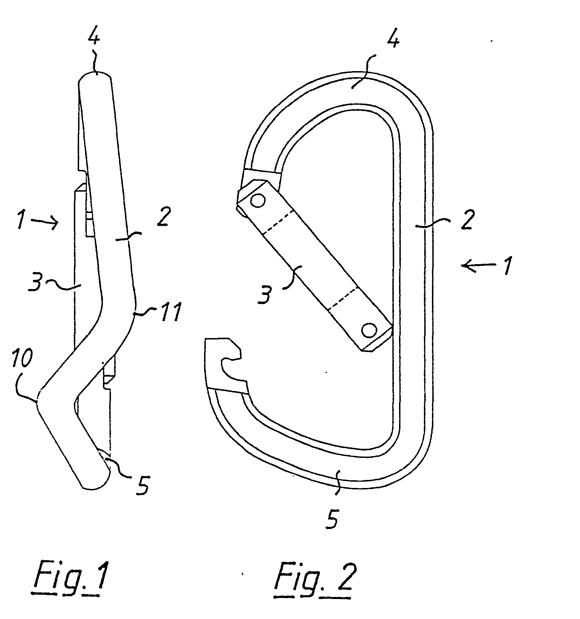

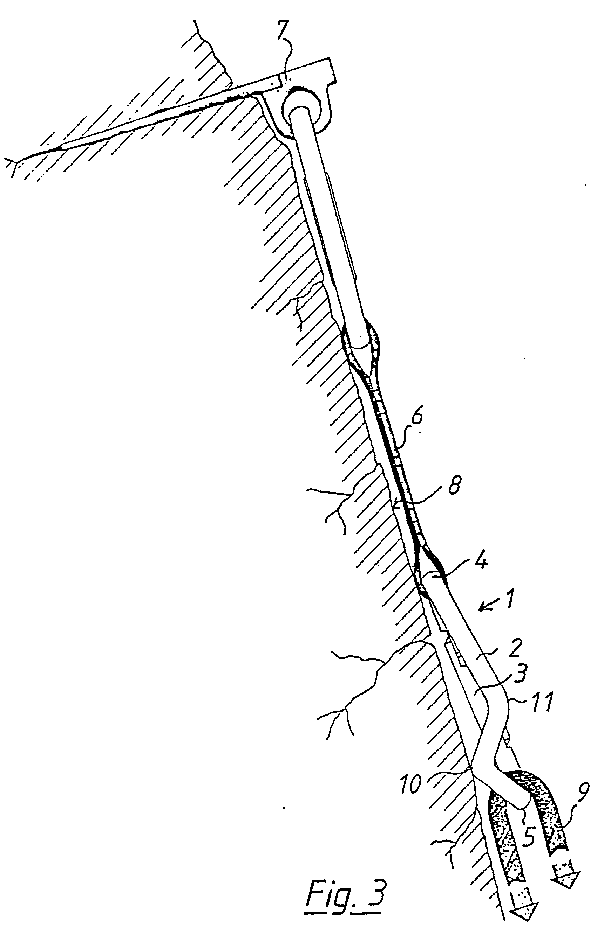

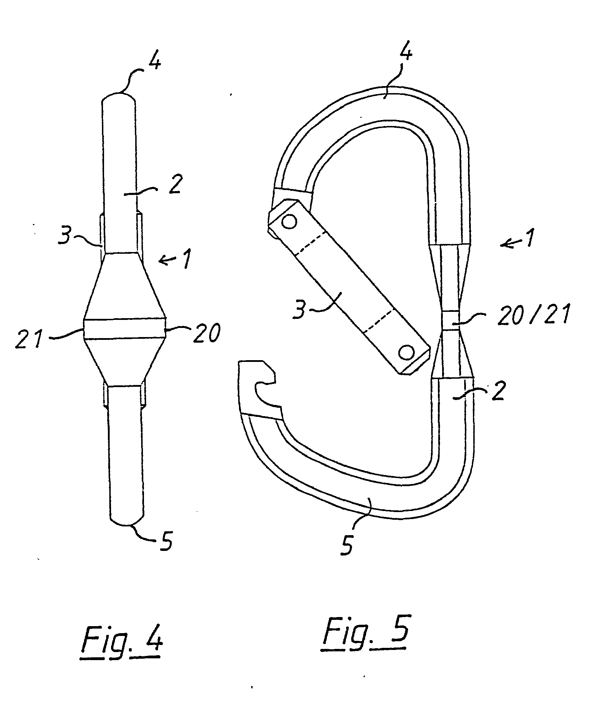

Der in den Fig. 1 bis 3 dargestellte Karabinerhaken weist einen C-förmigen Bügel 1 auf, dessen Steg mit dem Bezugszeichen 2 bezeichnet ist und dessen Enden durch eine federnde Sperrklinke 3 miteinander zu einem geschlossenen, länglichen Ring verbindbar sind. Der längliche Ring weist eine obere Schmalseite 4 und eine untere Schmalseite 5 auf. An der oberen Schmalseite 4 greift ein Halteelement 6 an (vgl. Fig. 3), welches als vernähte Schlinge aus flachem Bandmaterial ausgebildet ist. Das Halteelement 6 ist seinerseits an einem Felsanker 7 befestigt, welcher in einer Felswand 8 verankert ist. Die untere Schmalseite 5 des länglichen Ringes 1, 3 ist als Führungsbereich für ein Sicherungsseil ausgebildet, welches um diesen Führungsbereich herumgeführt ist.

Wie aus den Fig. 1 und 3 ersichtlich ist, ist der Steg 2 des C-förmigen Bügels 1 senkrecht zur Haupterstreckungsebene des Ringes nach oben und unten ausgebogen. Dabei sind diese Ausbiegungen 10 und 11 so ausgebildet, daß der Führungsbereich an der Schmalseite 5 des Ringes bei Auflage des Ringes auf einer Ebene (Oberfläche der Felswand 8) zwangsläufig in einem Abstand von dieser Ebene liegt (vgl. insbesondere die Darstellung in Fig. 3). Dieser Abstand ist größer als die Dicke des Sicherungsseiles 9, so daß das Sicherungsseil frei um den Führungsbereich an der unteren Schmalseite 5 umlaufen kann, ohne zwischen diesen; Führungsbereich und der Felswand 8 eingeklemmt zu werden.

Wie aus Fig. 3 ersichtlich ist, würden sich die gleichen Verhältnisse ergeben, wenn der Karabinerhaken um seine Längsachse um 180° verdreht an der Felswand 8 anliegt.

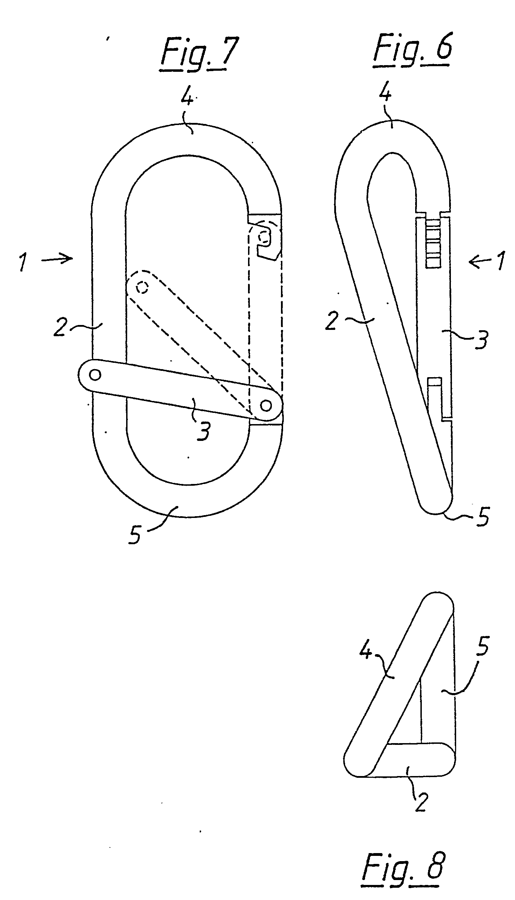

Beim Ausführungsbeispiel gemäß den Fig. 4 und 5 ist der Steg 2 des C-förmigen Bügels 1 senkrecht zur Haupterstreckungsebene des Ringes verdickt ausgebildet. Diese Verdickungen 20 und 21 heben den an der Schmalseite 5 befindlichen Führungsbereich ebenfalls von der Auflageebene im erforderlichen Maße ab. Gegebenenfalls kann bei diesem Ausführungsbeispiel auch die Sperrklinke 3 mit entsprechenden Verdickungen versehen sein. Diese Verdickungen an dem Steg 2 oder der Sperrklinke 3 können gegebenenfalls nachträglich angebracht werden.

Beim Ausführungsbeispiel nach den Fig. 6 bis 8 ist der Steg 2 des C-förmigen Bügels 1 um seine Längsachse verwunden ausgebildet, so daß auch hier der an der Schmalseite 5 befindliche Führungsbereich von einer ebenen Unterstützungsfläche in ausreichendem Maße abgehoben wird. Dieses Ausführungsbeispiel hat den besonderen Vorteil, daß die Sperrklinke 3 an dem gegenüberliegenden Steg 2 vorbeigeschwenkt werden kann. Auf diese Weise läßt sich der Karabinerhaken weiter öffnen und das Sicherungsseil entsprechend leichter einlegen.

## Patentansprüche

1. Karabinerhaken, insbesondere für Bergsteiger, mit einem C-förmigen Bügel (1), dessen Enden durch eine federnde Sperrklinke (3) miteinander verbunden sind, so daß sich ein geschlossener, länglicher Ring (1, 3) ergibt, an dessen einer Schmalseite (4) ein Halteelement (6) angreift und an dessen anderer Schmalseite (5) ein Führungsbereich für ein Sicherungsseil (9) ausgebildet ist, wobei der längliche Ring (1, 3) mit Ausbiegungen (10, 11) oder Vorsprüngen (20, 21) ausgebildet ist, die den Führungsbereich bei Auflage des Ringes (1, 3) auf einer Ebene zwangsläufig in einen Abstand zu dieser Auflageebene verbringen, dadurch gekennzeichnet, daß die Ausbiegungen (10, 11) oder Vorsprünge (20, 21) nach beiden Seiten senkrecht zur Haupterstreckungsebene des Ringes vorgesehen sind und ein freies Durchlaufen des Sicherungsseiles zwischen dem Führungsbereich (5) und der Auflageebene ermöglichen.

2. Karabinerhaken nach Anspruch 1, dadurch gekennzeichnet, daß der Steg (2) des C-förmigen Bügels (1) senkrecht zur Haupterstreckungsebene des Ringes (1, 3) nach oben und unten ausgebogen ist.

3. Karabinerhaken nach Anspruch 1, dadurch gekennzeichnet, daß der Steg (2) des C-förmigen Bügels (1) und/oder die Sperrklinke (3) senkrecht zur Haupterstreckungsebene des Ringes (1, 3) verdickt ausgebildet sind.

4. Karabinerhaken nach Anspruch 1, dadurch gekennzeichnet, daß die Ausbiegungen als Verwindung des Steges (2) des C-förmigen Bügels um seine Längsachse ausgebildet ist.

## Revendications

1. Mousqueton en particulier pour alpiniste, avec un étrier (1) en forme de C dont les extrémités sont reliées entre elles par une clenche d'arrêt à ressort (3) de sorte qu'il en résulte un anneau oblong fermé (1, 3) sur un côté étroit (4) duquel s'accroche un élément de retenue (6) et sur l'autre côté étroit (5) duquel est réalisée une zone de guidage pour une corde de sécurité (9), l'anneau oblong (1, 3) étant réalisé avec des coudes (10, 11) ou des saillies (20, 21) qui, lors de l'appui de l'anneau (1, 3) sur un plan, amènent de force la zone de guidage à une certaine distance de ce plan d'appui, caractérisé en ce que les coudes (10, 11) ou saillies (20, 21) sont prévus vers les deux côtés perpendiculairement au plan d'étendue principal de l'anneau et permettent un passage libre de la corde de sécurité entre la zone de guidage (5) et le plan d'appui.

2. Mousqueton selon la revendication 1, caractérisé en ce que le barrette (2) de l'étrier en forme de C (1) est recourbée vers le haut et vers le bas perpendiculairement au plan d'étendue principal de l'anneau (1, 3).

3. Mousqueton selon la revendication 1, caractérisé en ce que la barrette (2) de l'étrier en forme de C (1) et/ou la clenche d'arrêt (3) sont réalisées de façon à être épaissies perpendiculairement au plan d'étendue principal de l'anneau (1, 3).

4. Mousqueton selon la revendication 1, caractérisé en ce que les coudes sont réalisés sous forme d'une distorsion de la barrette (2) de l'étrier en forme de C autour de son axe longitudinal.

**Claims**

1. A carabiner hook, in particular for mountaineers, comprising a C-shaped loop (1), the ends of which are connected together by a sprung latch (3) so as to provide a closed elongate ring (1, 3), a holding element (6) engaging one narrow side (4) of the ring and a guide region for a securing line (9) being provided at the other narrow side (5) of the ring, wherein the elongate ring (1, 3) is provided with bent-out portions (10, 11) or projections (20, 21) which, when the ring (1, 3) bears against a plane, positively put the guide region at a spacing from said plane, characterised in that the bent-out portions (10, 11) or projections (20, 21) are provided towards both sides perpendicularly to the main plane in which the ring extends and permit the securing line to run freely through between the guide region (5) and said plane.

2. A carabiner hook according to claim 1 characterised in that the limb (2) of the C-shaped loop (1) is bent out upwardly and downwardly perpendicularly to the main plane in which the ring (1, 3) extends.

3. A carabiner hook according to claim 1 characterised in that the limb (2) of the C-shaped loop (1) and/or the latch (3) are of increased thickness perpendicularly to the main plane in which the ring (1, 3) extends.

4. A carabiner hook according to claim 1 characterised in that the bent-out portions is in the form of a twist of the limb (2) of the C-shaped loop about its longitudinal axis.

4

1→ 2

3~

10

11

5

*Fig. 1*

4

2

←1

3

5

*Fig. 2*

*Fig. 3*

_Fig. 4_

_Fig. 5_

Fig. 7

Fig. 6

Fig. 8